# EUROPÄISCHE PATENTSCHRIFT

(11) **EP 3 449 113 B1**
(45) Veröffentlichungstag und Bekanntmachung des Hinweises auf die Patenterteilung: **27.03.2024**
(21) Anmeldenummer: 17723296.4
(22) Anmeldetag: 26.04.2017
(51) Int. Cl.: F02M 35/02, F02M 35/024, B01D 46/10, B01D 46/42, B01D 46/00

(54) **LUFTFILTER MIT FLACHLUFTFILTERELEMENT**
AIR FILTER WITH FLAT AIR FILTER ELEMENT
FILTRE À AIR AVEC ÉLÉMENT DE FILTRE À AIR PLAT

(30) Priorität: 27.04.2016 DE 102016005088
(43) Veröffentlichungstag der Anmeldung: 06.03.2019
(73) Patentinhaber: MANN+HUMMEL GmbH, 71636 Ludwigsburg (DE)
(72) Erfinder: DIRNBERGER, Timo, 71672 Marbach (DE); SCHMID, Daniel, 74343 Sachsenheim (DE); WEBER, Andreas, 71691 Freiberg a. N. (DE)
(74) Vertreter: Mann + Hummel Intellectual Property
(86) Internationale Anmeldenummer: PCT/EP2017/059993
(87) Internationale Veröffentlichungsnummer: WO 2017/186820

(56) Entgegenhaltungen:
- EP-A2- 2 644 875
- WO-A1-2015/075104
- WO-A1-2017/102287
- DE-A1-102015 011 661
- US-A- 5 569 311
- Dimbouk: "The Anatomy of a DNA High Performance Filter | DNA Filters Ltd.", , 26. März 2016 (2016-03-26), XP055381803, Gefunden im Internet: URL:https://web.archive.org/web/2016032615 3933/http://www.dnafilters.com/en/technolo gy/the-anatomy-of-a-dna-high-performance-f ilter.html [gefunden am 2017-06-14] in der Anmeldung erwähnt

## Beschreibung

### Technisches Gebiet

Die Erfindung betrifft einen Luftfilter, insbesondere einen Luftfilter im Luftansaugtrakt eines Verbrennungsmotors, sowie eine Verwendung eines Flachluftfilterelements in einem solchen Luftfilter.

### Stand der Technik

Luftfilter werden im Luftansaugtrakt bei Verbrennungsmotoren, etwa in Kraftfahrzeugen, eingesetzt, um dem Verbrennungsmotor zuzuführende Verbrennungsluft von Verunreinigungen zu säubern. Beim Durchtritt der Verbrennungsluft durch ein Filtermedium des Luftfilters entsteht ein Druckverlust, der die Leistung des Verbrennungsmotors verringern kann. Um den Druckverlust zu verringern, kann eine Filterfläche des Filterelements vergrößert werden. Jedoch ist ein für den Luftfilter zur Verfügung stehender Einbauraum oft stark begrenzt, etwa im Motorraum eines Kraftfahrzeugs, so dass der Luftfilter nicht ausreichend vergrößert werden kann.

Aus der DE 10 2010 053 200 A1 ist ein Filterelement für einen Innenraumfilter einer Klima- oder Belüftungsanlage bekannt geworden, das einen fünfeckigen Faltenbalg aufweist, wobei der Faltenbalg aus einem ersten rechteckigen Teilfaltenbalg und einem zweiten viereckigen Teilfaltenbalg zusammengesetzt ist. Dadurch kann die Menge des Verschnitts von Filtermaterial bei der Herstellung des fünfeckigen Faltenbalgs reduziert werden.

DE 203 10 833 U1 beschreibt einen Filtereinsatz zum Einbau in einen Strömungskanal mit einem vorgegebenen Einbauquerschnitt. Der Filtereinsatz weist eine an den Einbauquerschnitt des Strömungskanals angepasste äußere Kontur auf, wobei auf einen Faltenbalg ein Kunststoffteil aufgesetzt ist, um den Faltenbalg an den Einbauquerschnitt anzupassen. Der Faltenbalg kann trapezförmig zugeschnitten sein, um Verschnitt zu vermeiden.

EP 1 144 083 B1 zeigt einen Luftfilter für Brennkraftmaschinen, der ein Gehäuse mit einem Deckel aufweist, in dem ein Filtereinsatz eingesetzt ist. Das Gehäuse weist eine Verstrebung auf, die sich zwischen zwei zu versteifenden Wandteilen des Gehäuses durch eine Aussparung im Filtereinsatz hindurch erstreckt. Bei dieser Bauart sind umfangreiche Abdichtmaßnahmen im Bereich der Aussparungen des Filtereinsatzes erforderlich, wodurch die Fertigung des Filtereinsatzes erschwert und verteuert wird. Darüber hinaus besteht bei der Montage des Filtereinsatzes das Risiko einer Beschädigung des Filtereinsatzes.

In der DE 10 2015 011 661 A1 ist eine Filtereinrichtung beschrieben, deren Filterelement aus mindestens zwei benachbart angeordneten Einzelfiltern besteht. Die Einzelfilter begrenzen an mindestens zwei Seiten einen randseitig offenen Gassammelraum, der mit der Reinseite der Einzelfilter strömungsverbunden ist und zur Aufnahme des gereinigten Gases dient.

In der WO 2017/102287 A1 ist ein Filterelement mit Faltenbalg und umlaufender Dichtung offenbart, wobei der Faltenbalg eine Durchgangsöffnung zwischen Reinseite und Rohseite aufweist.

Die WO 2015/075104 A1 beschreibt Filterelemente mit einem Faltenbalg mit gegenüberliegenden abgedichteten Stirnkantenflächen und mindestens zwei Elementabschnitten, wobei eine Stirnkantenfläche vom einen Elementabschnitt zum anderen Elementabschnitt eine Richtungsänderung erfährt.

Auf der unter der URL http://www.dnafilters.com/en/technology/the-anatomy-of-a-dna-high-performance-filter.html (abgerufen am 21.03.2016) erreichbaren Internetseite ist ein Luftfiltereinsatz für Motorräder beschrieben, der ein Filtermedium aus ölgetränkter Baumwolle aufweist. Das Filtermedium ist zwischen zwei Metallgitterlagen und innerhalb einer Randstruktur aus Polyurethan angeordnet, wobei in die Randstruktur eine umlaufende Dichtung aus Ethylenvinylacetat eingesetzt ist. Die Randstruktur und das Filtermedium können eine komplexe Außenumfangsgeometrie mit Rücksprüngen aufweisen. Bei dem bekannten Luftfilterelement kann ein zuverlässiger Dichtsitz in einem Filtergehäuse nicht ohne Weiteres gewährleistet werden. Auch ist durch die Materialzusammensetzung des Luftfilterelements eine spätere Entsorgung bzw. ein Recycling des Luftfilters erschwert. Es ist deshalb die Aufgabe der Erfindung, einen Luftfilter mit einem kostengünstig herzustellenden Flachluftfilterelement anzugeben, das es ermöglicht, eine möglichst große Filterfläche in einem Filtergehäuse mit einer vorgegebenen Form und Größe unterzubringen und das zugleich einen guten Dichtsitz innerhalb eines Filtergehäuses gewährleistet. Es ist ferner die Aufgabe der Erfindung, einen Luftfilter zu schaffen, der einen geringen Druckverlust und ein gutes akustisches Dämpfungsverhalten aufweist, ohne dabei einen Bauraum des Luftfilters zu vergrößern.

Die den Luftfilter betreffende Aufgabe wird durch einen Luftfilter mit den in Anspruch 1 angegebenen Merkmalen gelöst. Bevorzugte Ausführungsformen der Erfindung sind in den Unteransprüchen und der Beschreibung angegeben. Eine Verwendung eines Flachluftfilterelements in einem erfindungsgemäßen Luftfilter ist im abhängigen Anspruch 14 angegeben.

### Offenbarung der Erfindung

Das erfindungsgemäße Flachluftfilterelement ist insbesondere für einen erfindungsgemäßen Luftfilter im Luftansaugtrakt eines Verbrennungsmotors geeignet und weist ein Filtermedium aus einem Zellulosematerial auf. Zellulosematerial hat sich in der Praxis als Material für Luftfilter bewährt, zumal mit Zellulosematerial eine gute Filterleistung bei geringem Druckverlust erreicht werden kann. Darüber hinaus ist Zellulose kostengünstig zu erhalten und kann umweltschonend entsorgt werden. Das Filtermedium trägt ein umlaufendes Dichtungselement. Das Dichtungselement ermöglicht es, das Filtermedium gegen ein Filtergehäuse abzudichten, so dass keine ungefilterte Luft im Sinne eines Bypassstroms an dem Filtermedium vorbei strömen kann. Das Dichtungselement und das Filtermedium weisen an einer Außenkontur des Flachluftfilterelements zumindest eine Rücknehmung auf. Mit der Rücknehmung kann das Flachluftfilterelement erfindungsgemäß an eine Kontur des Filtergehäuses angepasst werden. Das Flachluftfilterelement muss dadurch nicht insgesamt verkleinert werden, um einen Rücksprung an einer Innenwand des Filtergehäuses, d. h. einer lokale Querschnittsverengung des Filtergehäuses, Rechnung tragen zu können. Vielmehr kann das erfindungsgemäße Flachluftfilterelement durch die Rücknehmung seiner Außenkontur den Rücksprung an der Innenwand des Filtergehäuses umgreifen, und neben dem Rücksprung bis an die Innenwand des Filtergehäuses heranreichen. Das Flachluftfilterelement kann im Bereich der Rücknehmung beispielsweise eine nicht konvexe Außenkontur aufweisen. Der genannte Rücksprung des Filtergehäuses kann beispielsweise für ein Verschlusselement des Filtergehäuses erforderlich sein. Durch die Rücknehmung des Filterelements kann aber auch Platz für andere, neben dem Flachluftfilterelement anzuordnende Bauteile geschaffen werden.

Das Dichtungselement ragt typischerweise um einen bestimmten Betrag, beispielsweise um 0,5 cm bis 2 cm, über das Filtermedium seitlich hinaus. Die Rücknehmung ist vorzugsweise an dem Filtermedium und an dem Dichtungselement gleichermaßen ausgebildet, so dass ein gleichmäßiger Überstand des Dichtungselements über das Filtermedium hinaus erhalten ist.

An dem Dichtungselement ist erfindungsgemäß eine umlaufende Haltenut zum Eingreifen eines Gehäuseteils eines Filtergehäuses ausgebildet. Dadurch kann ein definierter und sicherer Sitz des Flachluftfilterelements in dem Filtergehäuse eingerichtet werden. Insbesondere kann durch den Formschluss zwischen dem Dichtungselement und dem Gehäuseteil vermieden werden, dass das Dichtungselement aus seiner Einspannung an dem Filtergehäuse herausrutscht. Dadurch wird die Betriebssicherheit des Flachluftfilterelements verbessert.

Das Dichtungselement weist vorzugsweise eine gewölbte Außenseite auf. Die gewölbte Außenseite kann gegenüber der Haltenut an dem Dichtungselement ausgebildet sein. Die gewölbte Außenseite kann von einem weiteren Gehäuseteil umgriffen werden. Dadurch kann das Flachluftfilterelement noch sicherer zwischen dem Gehäuseteil und dem weiteren Gehäuseteil eingespannt und gegen das Filtergehäuse abgedichtet werden.

Gemäß einer bevorzugten Ausführungsform der Erfindung ist die Rücknehmung an einem Eckbereich des Flachluftfilterelements ausgebildet. Vorteilhafterweise kann die Rücknehmung in Form einer Fase ausgebildet sein. Die Rücknehmung kann dadurch fertigungstechnisch besonders einfach hergestellt werden.

Eine vorteilhafte Ausführungsform der Erfindung ist dadurch gekennzeichnet, dass die Rücknehmung, insbesondere mittig, an einer Seitenkante des Flachluftfilterelements ausgebildet ist. Es kann dann dadurch mittig an der Seitenkante ein Verschlusselement für ein Filtergehäuse, in dem das Flachluftfilterelement eingebaut ist, vorgesehen werden. Dadurch kann eine besonders gleichmäßige Verpressung des Dichtungselements zwischen zwei Gehäuseteilen des Filtergehäuses erreicht werden.

In einer vorteilhaften Ausführungsform ist vorgesehen, dass die Rücknehmung als eine gewölbte (gerundete, konkave) Einbuchtung ausgeführt ist. Eine solche Rücknehmung kann besonders dicht an einen Rücksprung in dem Filtergehäuse heranreichen. Somit kann die Filterfläche des Flachluftfilterelements maximiert werden. Auch kann eine abgerundete Einbuchtung den Kraftfluss im Bereich der Rücknehmung, insbesondere durch das Dichtungselement, verbessern.

Die Rücknehmung kann eine Einragtiefe von mindestens 10 mm, vorzugsweise mindestens 10,5 mm, aufweisen. Mit anderen Worten kann die durch die Rücknehmung gebildete Einbuchtung mindestens 10 mm, vorzugsweise mindestens 10,5 mm, tief in das Dichtungselement bzw. das Filtermedium einragen. Auch oder alternativ dazu kann der Rücksprung eine Einragtiefe von mindestens 10 mm, vorzugsweise mindestens 10,5 mm, aufweisen. Dann kann beispielsweise das Verschlusselement, insbesondere eine Schraube oder eine Spannfeder, am Filtergehäuse angeordnet werden, ohne dass es über dieses herausragt. Das Verschlusselement kann innerhalb einer Gehäuseumhüllenden des Filtergehäuses positioniert werden. Auch hat sich herausgestellt, dass sich mit einer solchen Einragtiefe bei einer korrespondierend verlaufenden Gehäusewandung, die der Einbuchtung bzw. dem Rücksprung folgt, eine besonders günstige akustische Dämpfungswirkung ergeben kann. Somit kann sich ein Doppelnutzen aus einer verbesserten Bauraumausnutzung und einem verbesserten akustischen Verhalten ergeben.

Das Flachluftfilterelement kann vorteilhafterweise mehrere Rücknehmungen aufweisen. Es können dann insbesondere mehrere Verschlusselemente für ein Filtergehäuse platzsparend an dem Flachluftfilterelement angeordnet werden.

Das Filtermedium ist als ein zickzackförmig gefalteter Faltenbalg ausgeführt. Dadurch kann das Flachluftfilterelement mit einer besonders großen Filterfläche ausgeführt werden. Das Filtermedium kann vorteilhaft im abgewickelten Zustand zugeschnitten werden und erst dann zum Faltenbalg gefaltet werden. Dies vereinfacht die Herstellung. Zum Zuschneiden kann bevorzugt eine Laserschneidanlage verwendet werden.

Das Filtermedium weist miteinander verleimte Stirnkanten, insbesondere eine Stirnkantenverleimung, auf. Auf diese Weise können die Falten des Faltenbalgs besonders einfach und zuverlässig gegeneinander abgedichtet werden. Vorzugsweise ist die Verleimung wasserbeständig ausgeführt, um auch bei einer hohen Luftfeuchte bzw. bei einem Wasserkontakt des Flachluftfilterelements eine Dauerbeständigkeit der Verleimung zu gewährleisten.

Die sogenannte Stirnkantenverleimung kann hergestellt werden, indem auf ein insbesondere ungefaltetes Filtermedium wenigstens eine sogenannte Leimraupe aufgetragen wird. Die Leimraupe wird vorzugsweise aus einem Klebstoff, bevorzugt einem in geschmolzenem Zustand aufgetragenen Schmelzklebstoff, beispielsweise aus Polyamid oder Polyester, gebildet. Das Filtermedium kann dann zu dem Faltenbalg gefaltet werden, sodass benachbarte Falten des Faltenbalges miteinander verbunden werden. Typischerweise überlappen sich Leimraupen bzw. Abschnitte der Leimraupe benachbarter Falten. An der Stirnseite des Filtermediums können zwei Leimraupen bzw. zwei Abschnitte der Leimraupe, insbesondere überlappend oder alternativ nicht überlappend, aufeinander zulaufen.

Die Leimraupe kann üblicherweise ununterbrochen und insbesondere parallel oder im Wesentlichen parallel zur Stirnkante bzw. zu den Stirnkanten des Filtermediums verlaufen.

Erfindungsgemäß verläuft die Stirnkantenverleimung wenigstens im Bereich der Rücknehmung, vorzugsweise entlang der gesamten Stirnseiten des Flachluftfilterelements, unter einem Tangentialwinkel von höchstens 45° zur Hauptrichtung des gefalteten Filtermediums, d. h. zur Stirnseite des gefalteten Filtermediums. Dies bedeutet, dass die durch die im gefalteten Zustand sichtbaren Teile der Stirnkantenverleimung im Bereich der Faltenspitzen gebildete Kurve maximal einen Winkel von 45° zur Stirnseite und damit minimal einen Winkel von 45° zu den Faltkanten aufweist. Dadurch kann eine kontinuierlich und bevorzugt durchgehend dichte Herstellung der Leimraupe und somit der Stirnkantenverleimung erleichtert werden. Dabei ist unter Hauptrichtung die - üblicherweise im Wesentlichen geradlinig verlaufende - Ausrichtung bzw. Richtung der die Stirnkanten bildenden Stirnkante des ungefalteten Filtermediums außerhalb des Bereichs einer, die Rücknehmung bildenden, Einbuchtung zu verstehen. Mit anderen Worten ergibt sich die Hauptrichtung aus der Richtung der Stirnkante des ungefalteten Filtermediums unter Hinwegdenkens der Einbuchtung, dies entspricht in der Regel der Maschinenrichtung.

Die Leimraupe kann insbesondere knickfrei verlaufen. Auch kann der maximal erreichte Tangentialwinkel der Leimraupe abhängig von der Breite der Leimraupe und/oder dem Faltenabstand bzw. der Faltenteilung des Filtermediums gewählt sein.

Denkbar ist auch, mehrere Leimraupen auf das Filtermedium, insbesondere zueinander versetzt, aufzutragen. Insbesondere ist denkbar, für die Stirnkanten mehrere Stirnkantenverleimungen vorzusehen. Auch ist denkbar, entlang einer oder mehrerer Stirnkanten des Filtermediums zusätzlich eine, beispielsweise als Dichtplatte ausgebildete, Stirnkantenabdichtung vorzusehen.

Das Dichtungselement kann entlang einer Dichtungsanbindungskontur an die Stirnkantenverleimung, insbesondere formschlüssig, dichtend anschließen. Die Dichtungsanbindungskontur kann hierzu die Stirnkantenverleimung formschlüssig umschließen. Die Dichtungsanbindungskontur kann radial (von der äußeren Stirnseite außen nach innen gesehen), insbesondere reinseitig, die Stirnkantenverleimung überragen und/oder überdecken.

Die Herstellung wird dadurch weiter erleichtert, dass die Dichtungsanbindungskontur des Dichtungselements und die Stirnkantenverleimung im Bereich der Rücknehmung, vorzugsweise entlang der gesamten Stirnseiten des Flachluftfilterelements, zueinander parallel verlaufen.

Auch kann dazu vorgesehen sein, dass das Dichtungselement und die Stirnkanten im Bereich der Rücknehmung, vorzugsweise entlang der gesamten Stirnseiten des Flachluftfilterelements, zueinander parallel verlaufen. Dies ermöglicht eine gleichmäßige Herstellung des Dichtungselements. Wird das Dichtungselement beispielsweise durch Freischäumen hergestellt, kann eine gleichmäßige Schaumhöhe erreicht werden.

Dazu ist auch denkbar, dass das Dichtungselement und/oder die Stirnkanten im Bereich der Rücknehmung, vorzugsweise entlang der gesamten Stirnseiten des Flachluftfilterelements, parallel zur Stirnkantenverleimung verlaufen. Auch oder alternativ ist denkbar, dass in einem Übergangsbereich der Rücknehmung der Abstand zwischen der Außenkontur und der Stirnkantenverleimung und/oder zwischen einer Verlaufslinie des Dichtungselements und der Stirnkantenverleimung gegenüber jeweils angrenzenden Bereichen erhöht ist.

In einer vorteilhaften Ausführungsform ist vorgesehen, dass das Dichtungselement aus Polyurethan gefertigt ist. Polyurethan lässt sich einfach verarbeiten und weist geeignete Eigenschaften auf, um als das Dichtungselement eingesetzt zu werden. Bevorzugt ist das Dichtungselement an das Flachluftfilterelement unmittelbar angespritzt oder angeschäumt. Dadurch kann die Fertigung des Flachluftfilterelements vereinfacht werden. Ferner kann dadurch erreicht werden, dass das Dichtungselement selbst abdichtend an dem Flachluftfilterelement befestigt ist. Das Flachluftfilterelement kann somit bedarfsweise aus nur zwei unterschiedlichen Materialien, beispielsweise Polyurethan und Cellulose, bestehen. Dies ist im Hinblick auf die Herstellungskosten sowie auch die spätere Verwertung bzw. das Recycling des Filterelements vorteilhaft. Es versteht sich, dass das Dichtungselement auch mittels eines Klebstoffs am Filtermedium festgeklebt sein kann.

In den Rahmen der vorliegenden Erfindung fällt ein Luftfilter umfassend ein Filtergehäuse und ein oben beschriebenes, erfindungsgemäßes Flachluftfilterelement. Das Filtergehäuse weist einen Gehäusetopf und einen Gehäusedeckel auf. Ferner ist ein Verschlusselement zum Verschließen des Filtergehäuses vorgesehen. Das Verschlusselement dient einem Verspannen des Gehäusedeckels mit dem Gehäusetopf. Das Flachluftfilterelement ist mit seinem Dichtungselement im verschlossenen Zustand des Filtergehäuses zwischen dem Gehäusetopf und dem Gehäusedeckel umlaufend geklemmt gehalten. Das Dichtungselement ist somit im Montagezustand des Flachluftfilterelements im Filtergehäuse umlaufend zwischen dem Gehäusedeckel und dem Gehäusetopf eingespannt gehalten. Das Filtermedium wird dadurch gegen das Filtergehäuse abgedichtet. Der Gehäusetopf oder der Gehäusedeckel greift, insbesondere mit einem freien Randabschnitt, in die Haltenut des Dichtungeselements ein. Dadurch kann einerseits ein definierter Dichtsitz des Flachluftfilterelements in dem Filtergehäuse erreicht werden. Ferner kann durch den Formschluss zwischen der Haltenut und dem Gehäustopf oder dem Gehäusedeckel vermieden werden, dass das Flachluftfilterelement aus der abdichtenden Einspannung herausrutscht. Dies ist insbesondere im Bereich des Rücksprungs des Flachluftfilterelements wesentlich. Bei bekannten Filterelementen kann dies beispielsweise dann geschehen, wenn das Filtermedium bei Wasserbeaufschlagung paketiert.

Das Verschlusselement des Filtergehäuses ist im Bereich der Rücknehmung angeordnet. Mit anderen Worten ist das Verschlusselement - bezogen auf die Längsachse des Filtergehäuses - in einer radialen Richtung außerhalb der Rücknehmung angeordnet bzw. greift in diese ein. Dadurch kann ein besonders platzsparender Aufbau des Luftfilters erreicht werden. Durch die Erfindung ist es möglich, das Filtermedium dichter an dem Verschlusselement anzuordnen. Insbesondere kann das Filtermedium das Verschlusselement teilweise umgreifen. Bei vorgegebenen Außenabmessungen des Filtergehäuses können somit eine besonders große Filterfläche und ein größeres Gehäusevolumen des Filtergehäuses eingerichtet werden. Dadurch kann der Druckverlust der Luft beim Durchtritt durch den Luftfilter verringert werden und es kann das akustische Dämpfungsverhalten des Luftfilters verbessert werden. Das Verschlusselement kann vorteilhafterweise eine vom Flachluftfilterelement aufgespannte Filterebene des Filtergehäuses durchstechen. Der Gehäusedeckel und der Gehäusetopf werden somit von dem Verschlusselement in Richtung der Längsachse des Filtergehäuses, d. h. senkrecht zu der Filterebene, unter Einklemmung des Dichtungselements gegeneinander gepresst.

Das Verschlusselement ist entlang oder im Wesentlichen entlang einer linearen, die Rücknehmung überbrückenden Fortsetzung des Dichtungselements, insbesondere der zur Abdichtung ausgelegten Dichtfläche oder Hauptdichtfläche angeordnet. Mit anderen Wortenist das Verschlusselement derart angeordnet, dass es sich, die Rücknehmung des Dichtungselements weggedacht, an der Kontaktfläche der Dichtung, beispielsweise am Außenrand des Dichtungselements oder im Bereich einer Dichtungsnut befindet, das heißt in Fortsetzung der Kontaktfläche der Dichtung, beispielsweise des insbesondere außerhalb der Rücknehmung im Wesentlichen geraden Außenrandes des Dichtungselements oder im Bereich einer Dichtungsnut. Hierdurch kann der Kraftfluss insbesondere im Bereich des Verschlusselements verbessert werden.

Das Verschlusselement kann nach der Erfindung ein Schnapphaken, eine Schraube oder ein anderes Spannelelement, wie zum Beispiel eine Spannfeder, sein. Eine Spannfeder kann besonders schnell und ohne Werkzeug betätigt werden, was beim Austausch des Flachluftfilterelements Vorteile bietet. Mit einer Schraube kann demgegenüber eine besonders sichere Verspannung des Gehäusedeckels und des Gehäusetopfs eingerichtet werden. Insbesondere kann die Stärke der gegenseitigen Verpressung durch ein kontrolliertes Anziehen der Schraube gesteuert werden. Ein Kopf der Schraube stützt sich dabei vorzugsweise an einem der Gehäuseteile ab. Ein Gewindeabschnitt der Schraube kann direkt in das andere Gehäuseteil eingreifen. Alternativ kann der Gewindeabschnitt in eine Mutter eingreifen, die sich an dem anderen Gehäuseil abstützt.

Besonders bevorzugt sind der Gehäusedeckel und der Gehäusetopf in einem von der Rücknehmung abgewandten Bereich über ein Scharnier oder ein Hakenelement miteinander verbunden. Das Scharnier bzw. Hakenelement kann insbesondere auf einer der Rücknehmung des Flachluftfilterelements gegenüberliegend angeordneten Gehäuseseite des Filtergehäuses angeordnet sein. Es ist dann vorteilhaft nur ein Verschlusselement erforderlich, um den Gehäusetopf mit dem Gehäusedeckel zu verschließen. Durch die gegenüberliegende Anordnung der genannten Bauteile kann darüber hinaus umlaufend eine gleichmäßige Verpressung der Gehäuseteile mit dem Dichtungselement erreicht werden.

Nach einer Weiterbildung der Erfindung weist das Filtergehäuse mehrere Verschlusselemente und das Flachluftfilterelement eine der Anzahl der Verschlusselemente entsprechende Anzahl an Rücknehmungen auf. Durch mehrere Verschlusselemente kann eine besonders sichere und gleichmäße Verspannung der Gehäuseteile gegeneinander erreicht werden. Durch die mehreren Rücknehmungen bleiben die oben beschriebenen Vorteile erhalten, insbesondere hinsichtlich Baugröße des Luftfilters, Größe der Filterfläche des Filtermediums, Druckverlust und akustischem Dämpfungsverhalten.

Weitere Vorteile der Erfindung ergeben sich aus der Beschreibung und der Zeichnung. Die vorstehend beschriebenen und noch weiter ausgeführten Merkmale können erfindungsgemäß einzeln für sich oder zu mehreren in beliebigen Kombinationen Verwendung finden.

### Kurze Beschreibung der Zeichnungen

In der Zeichnung zeigen:
- Fig. 1a: eine erste Ausführungsform eines Luftfilters mit einem Flachluftfilterelement mit einer Einbuchtung mittig an einer Seitenkante, in einer schematischen Explosionsdarstellung;
- Fig. 1b: den Luftfilter gemäß Fig. 1a in einer schematischen, perspektivischen Ansicht;
- Fig. 1c: den Luftfilter gemäß Fig. 1a in einer schematischen Aufsicht;
- Fig. 1d: den Luftfilter gemäß Fig. 1a in einem schematischen Querschnitt entlang der in Fig. 1c mit A-A bezeichneten Schnittebene;
- Fig. 1e: den Luftfilter gemäß Fig. 1a in einem schematischen Horizontalschnitt entlang der in Fig. 1d mit B-B bezeichneten Schnittebene;
- Fig. 2: eine zweite Ausführungsform eines Luftfilters mit einem Flachluftfilterelement mit einer Rücknehmung in einem Eckbereich, in einer schematischen Explosionsdarstellung;
- Fig. 3: eine dritte Ausführungsform eines Luftfilters mit einem Flachluftfilterelement mit einer Fase in einer schematischen Explosionsdarstellung;
- Fig. 4a: eine vierte Ausführungsform eines Luftfilters mit einem Flachluftfilterelement mit einer Rücknehmung an einer Seitenkante und einer Spannfeder als Verschlusselement in einer schematischen Explosionsdarstellung;
- Fig. 4b: den Luftfilter gemäß Fig. 4a in einer schematischen Querschnittsansicht;
- Fig. 5: eine fünfte Ausführungsform eines Luftfilters mit einer Spannfeder in einem Eckbereich und mit einem erfindungsgemäßen Flachluftfilterelement in einer schematischen Explosionsdarstellung;
- Fig. 6a: eine sechste Ausführungsform eines Luftfilters mit mehreren Verschlusselementen und mit einem erfindungsgemäßen Flachluftfilterelement mit mehreren Rücknehmungen in einer schematischen Explosionsdarstellung;
- Fig. 6b: den Luftfilter von Fig. 6a in einer schematischen Aufsicht mit entferntem Gehäusedeckel;
- Fig. 7a: eine siebte Ausführungsform eines Luftfilters in Draufsicht;
- Fig. 7b: einen Bereich mit einer Rücknehmung des Luftfilters der Fig. 7a in vergrößerter Ansicht;
- Fig. 7c: den Luftfilter der Fig. 7a ohne Gehäusedeckel in perspektivischer, senkrecht zu den Stirnseiten des Faltenbalges geschnittener, Darstellung;
- Fig. 8a: ein alternatives Flachluftfilterelement in schematischer Draufsicht;
- Fig. 8b: einen Bereich mit einer Rücknehmung des Flachluftfilterelements der Fig. 7a in vergrößerter Ansicht und
- Fig. 8c: eine schematische Darstellung des Verlaufs einer Leimraupe entlang eines ungefalteten Filtermediums.

### Ausführungsformen der Erfindung

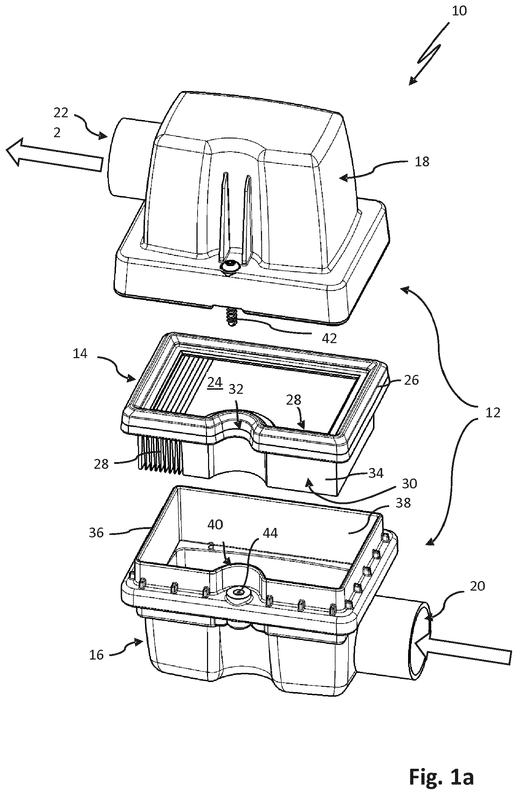

**Fig. 1a** zeigt eine erste Ausführungsform eines erfindungsgemäßen Luftfilters **10** mit einem Filtergehäuse **12** und mit einem Flachluftfilterelement **14** in einer schematischen Explosionsdarstellung. Das Filtergehäuse 12 umfasst einen Gehäusetopf **16** und einen Gehäusedeckel **18.** Ein Einlass des Filtergehäuses für die zu filternde Luft ist mit **20** und ein Auslass des Filtergehäuses 12 ist mit **22** bezeichnet. Zwischen dem Gehäusetopf 16 und dem Gehäusedeckel 18 ist das Flachluftfilterelement 14 anordenbar.

Das Flachluftfilterelement 14 umfasst ein Filtermedium **24** und ein Dichtungselement **26,** das umlaufend am Filtermedium 24 angeordnet ist. Das Filtermedium 24 besteht aus einem Zellulosematerial. Das Filtermedium 24 ist zickzackförmig gefaltet und liegt in Form eines Faltenbalgs vor. Bevorzugt wird das Filtermedium 24 zugeschnitten, bevor es zu dem Faltenbalg gefaltet wird. Das Filtermedium weist Stirnkanten **28** auf, die vorzugsweise miteinander wasserfest verleimt sind, insbesondere ist somit eine Stirnkantenverleimung ausgebildet. Das Dichtungselement 26 ist hier oberseitig an dem Filtermedium 18 angeordnet. Das Dichtungselement 26 kann an das Filtermedium 24 insbesondere angespritzt oder angeschäumt sein. Insoweit kann das Dichtungselement 26 beispielsweise aus einem Polyurethan (PU), bevorzugt einem PU-Schaum, bestehen.

Das Flachluftfilterelement 14 weist an seiner Außenkontur **30** eine Rücknehmung **32** auf. Die Rücknehmung 32 ist hier mittig an einer Seitenkante **34** des Flachluftfilterelements 14 ausgebildet. Die Rücknehmung 30 ist hier als eine gewölbte Einbuchtung ausgeführt. Die Einbuchtung ist hier halbkreisförmig gerundet ausgeführt. Die Einbuchtung kann konkav an dem Flachluftfilterelement 14 ausgeführt sein und nach innen weisen. Die Rücknehmung 30 kann an dem Filtermedium 18 und dem Dichtungselement 20 gleichförmig ausgeführt sein, so dass das Dichtungselement 20 überall gleich weit über das Filtermedium 18 auskragt.

Der Gehäusetopf 16 kann oberseitig einen umlaufenden freien Randabschnitt **36** aufweisen. Der umlaufende Randabschnitt 36 bildet hier einen oberseitigen Abschluss einer Innenwand **38** des Gehäusetopfs 16. Die Innenwand 38 und der umlaufende Randabschnitt 36 weisen hier oberseitig einen Rücksprung **40** auf. Der Rücksprung 40 kann insbesondere korrespondierend zu der Rücknehmung 32 des Flachluftfilterelements 14 ausgeführt sein. An dem Gehäusedeckel 18 ist ein als Schraube ausgebildetes Verschlusselement **42** für den Gehäusedeckel 18 und den Gehäusetopf 16 angeordnet. Die Schraube kann den Gehäusedeckel 18 durchragen. An dem Gehäusetopf 16 ist eine Ausnehmung **44** zum Eingreifen der Schraube 40 ausgebildet. Die Ausnehmung 44 ist außerhalb des freien Randabschnitts 36 im Bereich des Rücksprungs 40 an dem Gehäusetopf 14 ausgebildet.

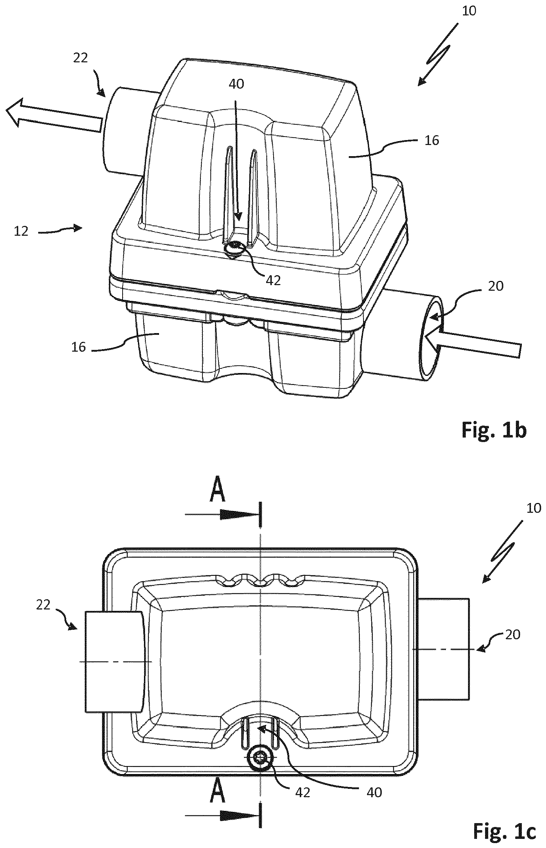

**Fig. 1b** zeigt den Luftfilter 10 gemäß Fig. 1a mit verschlossenem Filtergehäuse 12 in einer perspektivischen Ansicht. Der Gehäusetopf 16 und der Gehäusedeckel 18 werden hier durch das Verschlusselement 42 gegeneinander verspannt. In **Fig. 1c** ist der Luftfilter 10 in einer Draufsicht gezeigt. Auch an dem Gehäusedeckel 16 ist ein Rücksprung 40 ausgebildet. Außenseitig im Bereich des Rücksprungs 40 kann die Schraube angeordnet sein.

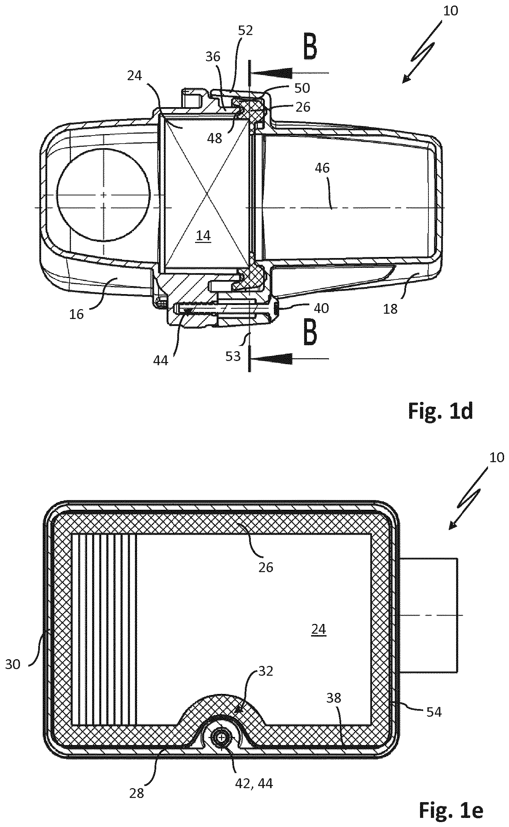

**Fig. 1d** zeigt den Luftfilter 10 gemäß Fig. 1a in einem schematischen Querschnitt entlang der in Fig. 1 c mit A-A bezeichneten Schnittebene im montierten Zustand. Das Flachluftfilterelement 14 ist in dem Filtergehäuse 12 angeordnet. Das Dichtungselement 26 erstreckt sich in einer zur Längsachse **46** des Filtergehäuses 12 radialen Richtung über den freien Randabschnitt 36 des Gehäusetopfs 16 hinaus. Der freie Randabschnitt 36 des Gehäusetopfs 16 greift umlaufend in eine Haltenut **48** des Dichtungselements 26 ein. Die Haltenut 48 kann nach einem nicht näher gezeigten Ausführungsbeispiel auch dem Gehäusedeckel 18 zugewandt sein. Das Dichtungselement 26 des Flachluftfilterelements 14 ist mithin zwischen dem Gehäusetopf 16, hier dessen freien Randabschnitt 36, und dem Gehäusedeckel 18 umlaufend in einer zur Längsachse 46 des Filtergehäuses 12 axialen Richtung geklemmt gehalten. Das Dichtungselement 26 kann darüber hinaus mit seinem freien Endabschnitt **50** derart ausgestaltet sein, dass dieses zusätzlich in radialer Richtung an einem Ringkragen **52** des Gehäusedeckels 18 dichtend anliegt. Das Dichtungselement 26 ist in diesem Sonderfall somit als ein kombiniertes Radial- und Axialdichtungselement ausgeführt.

Der Ringkragen 52 umgreift den Gehäusetopf 16 außenseitig. Das Dichtungselement 26 des Flachluftfilterelements 14 ist aufgrund des gehäuseseitigen Eingriffs in die Haltenut 48 umlaufend, insbesondere auch im Bereich der Rücknehmung 32 in radialer Richtung zuverlässig zwischen den beiden Gehäuseteilen lagefixiert gehalten. Dadurch wird auch im Filterbetrieb bei einer bei einer Anströmung des Flachluftfilterelements, d. h. einer radial gerichteten Zugbelastung des Dichtungselements 26, ein zuverlässiger Dichtsitz des Flachluftfilterelements 14 im Filtergehäuse 12 gewährleistet. Um das Gehäuseunterteil 14 und den Gehäusedeckel 18 auf einer dem Verschlusselement 42 gegenüberliegenden Seite des Filtergehäuses 12 zu verbinden, kann ein Hakenelement (verdeckt) an einem der Gehäuseteile 16, 18 ausgebildet sein. Das Hakenelement greift dabei vorzugsweise in eine entsprechende Hakenausnehmung (verdeckt) des anderen Gehäuseteils 16, 18 ein.

**Fig. 1e** zeigt den Luftfilter 10 in einem Horizontalschnitt entlang der in Fig. 1d mit B-B bezeichneten Schnittebene.

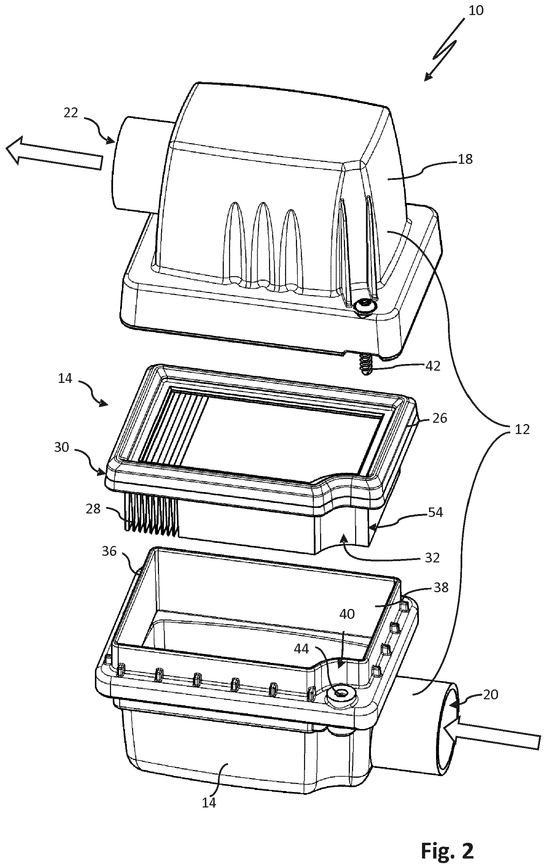

**Fig. 2** zeigt eine zweite Ausführungsform eines Luftfilters 10 mit einem Flachluftfilterelement 12 in einer explodierten Darstellung seiner Teile. Der Luftfilter 10 unterscheidet sich von dem vorstehend im Zusammenhang mit den Figuren 1a bis 1e erläuterten Luftfilter 10 im Wesentlichen darin, dass die Rücknehmung 32 in einem Eckbereich **54** des Flachluftfilterelements 14 ausgebildet ist. Die Rücknehmung 32 kann dabei insbesondere als eine nach innen gewölbte, konkave Einbuchtung der Außenkontur 30 des Flachluftfilterelements 14 ausgeführt sein. Als Verschlusselement 42 kann eine Schraube im Bereich der Rücknehmung 30 angeordnet sein.

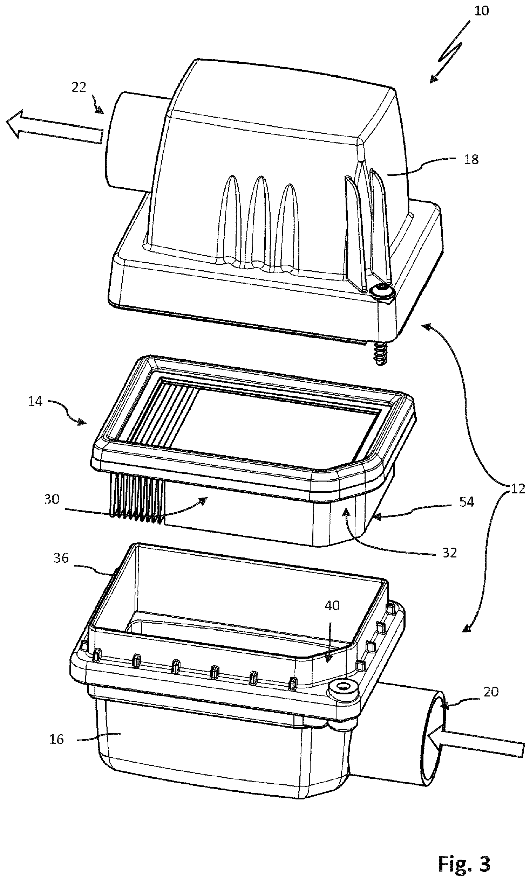

**Fig. 3** zeigt eine dritte Ausführungsform eines Luftfilters 10 in einer explodierten Darstellung seiner Teile. Die dritte Ausführungsform entspricht in ihrem Aufbau im Wesentlichen der zweiten Ausführungsform gemäß Fig. 2. Eine Rücknehmung 30 am Eckbereich 54 des Flachluftfilterelements 14 ist hier als eine Fase ausgeführt. Der Randabschnitt 36 des Gehäusetopfs 16 kann einen Rücksprung 40 aufweisen, der an die Form der Fase angepasst ist.

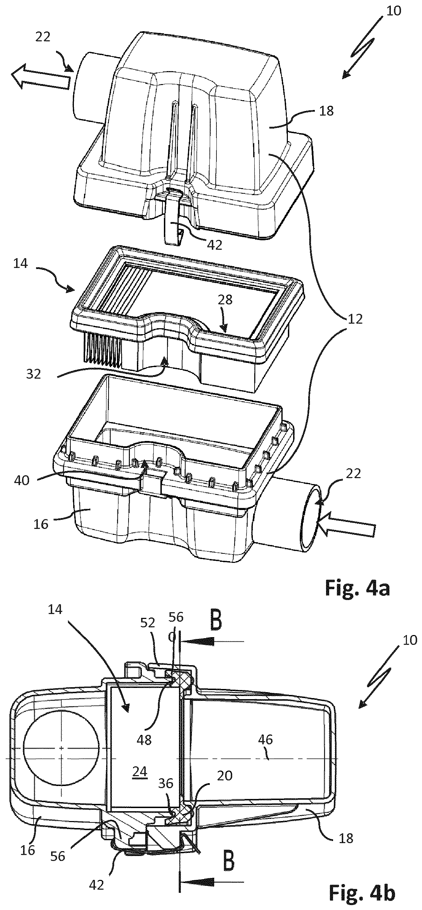

**Fig. 4a** zeigt eine vierte Ausführungsform eines Luftfilters 10 in einer Explosionsdarstellung. Als Verschlusselement 42 ist hier eine Spannfeder vorgesehen. Die Rücknehmung 32 ist mittig an einer Seitenkante 34 des Flachluftfilterelements 14 ausgebildet.

Die Rücknehmung 32 kann breiter als tief ausgebildet sein, insbesondere wenigstens doppelt so breit wie tief.

**Fig. 4b** zeigt den Luftfilter 10 gemäß Fig. 4a in einer Querschnittsansicht auf Höhe der Rücknehmung 32 und der Spannfeder. Die Spannfeder umgreift eine seitliche Auskragung **56** des Gehäusetopfs 16 und den Ringkragen 52 des Gehäusedeckels 18. Die Spannfeder kann dabei elastisch gedehnt werden. Dadurch können der Gehäusetopf 16 und der Gehäusedeckel 18 gegeneinander verspannt werden. Zwischen dem Gehäusetopf 16 und dem Gehäusedeckel 18 ist dabei das Dichtungselement 20 des Flachluftfilterelements 14 umlaufend eingeklemmt. Das Dichtungselement 20 weist die Haltenut 48 auf, in die der Gehäusetopf 16 mit seinem freien Randabschnitt eingreift.

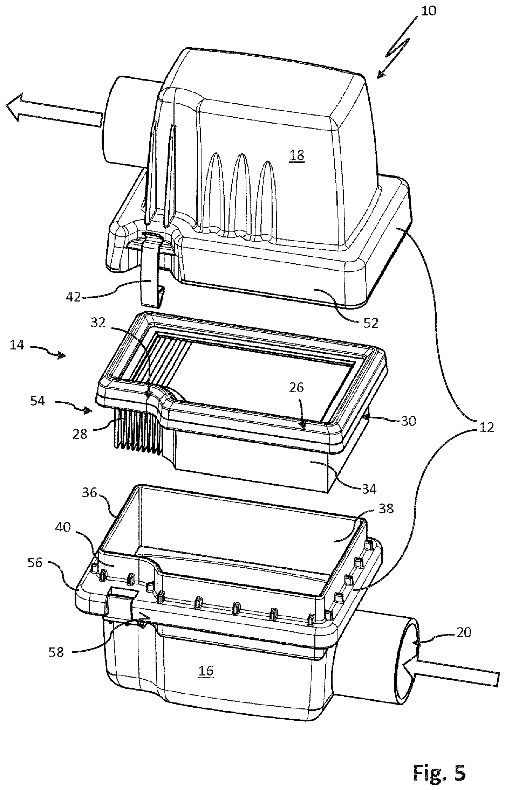

**Fig. 5** zeigt eine fünfte Ausführungsform eines Luftfilters 10 in einer Explosionsdarstellung, bei der eine Spannfeder als Verschlusselement 42 dient. Die Rücknehmung 32 des Flachluftfilterelements 14 ist in einem Eckbereich 54 ausgebildet. Die Rücknehmung 32 kann mit einem Parallelversatz zu einer Seitenkante 34 des Flachluftfilterelements 14 ausgeführt sein. Die Spannfeder kann zum Verschließen des Gehäusetopfs 16 mit dem Gehäusedeckel 18 an der Rücknehmung 32 entlang geführt werden. Dadurch kann vermieden werden, dass das Verschlusselement 42 seitlich über einen Außenrand **58** des Gehäusedeckels 18 herausragt.

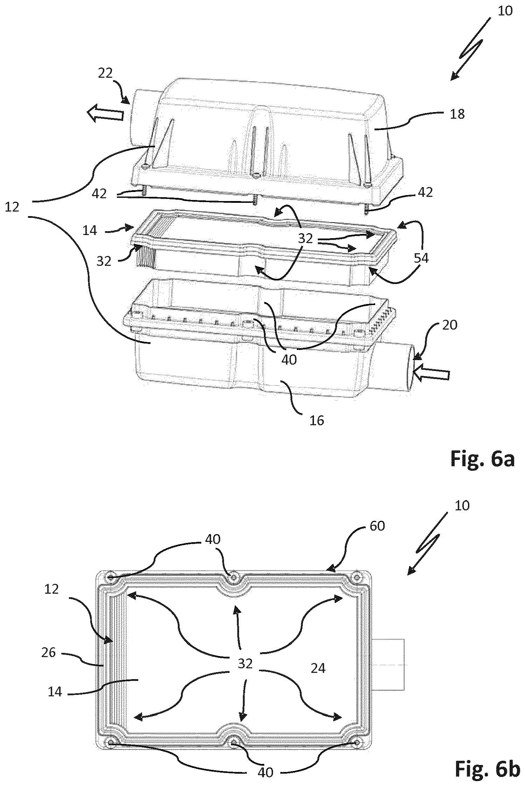

**Fig. 6a** zeigt eine sechste Ausführungsform eines Luftfilters 10 bei dem das Flachluftfilterelement 14 mit mehreren, hier beispielhaft sechs, Rücknehmungen 32 ausgebildet ist. Die Rücknehmungen 32 können in Eckbereichen 54 und an Seitenkanten 34, beispielsweise mittig, ausgebildet sein. Zum Befestigen des Gehäusedeckels 18 am Gehäusetopf 16 kann der Luftfilter 10 mehrere Verschlusselemente 42 aufweisen. Die Verschlusselemente 42 können in Form von Schrauben oder auch Spannfedern oder dergl. ausgebildet sein.

**Fig. 6b** zeigt den Luftfilter 10 gemäß Fig. 6a in einer schematischen Aufsicht mit entferntem Gehäusedeckel. Die Verschlusselemente 42 sind im Bereich der Rücknehmungen 32 angeordnet. Die Verschlusselemente 42 werden somit von einem Dichtungselement 26 des Flachluftfilterelements 14 im Bereich der Rücknehmungen 32 umgriffen. Es kann somit eine in der Aufsicht im Wesentlichen rechteckige Umrisslinie bzw. Außenform **60** des Luftfilters 10 realisiert werden, wobei das Flachluftfilterelement 14 mit seinem Dichtungselement 26 und dem Filtermedium 24 dicht an die Außenform 60 heranreicht. Insbesondere kann das Dichtungselement 20 in Bereichen zwischen den Verschlusselementen 42 angeordnet werden, um eine Filterfläche des Filtermediums 18 zu vergrößern.

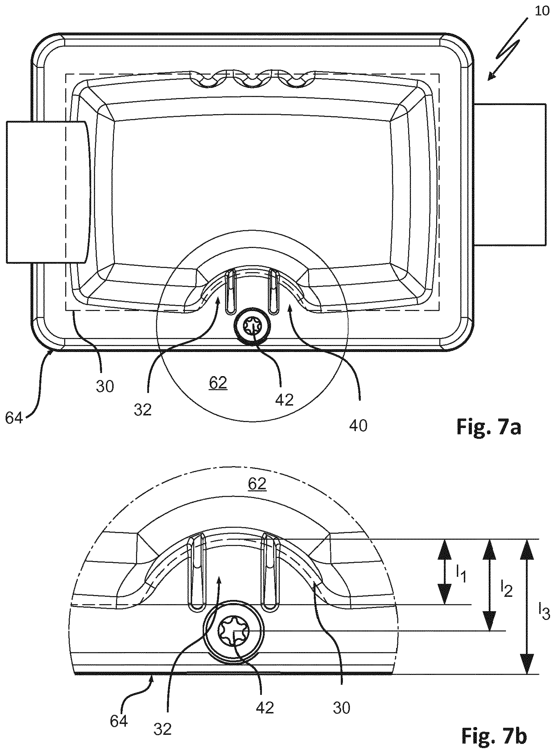

**Fig. 7a** zeigt eine Draufsicht einer siebten Ausführungsform eines Luftfilters 10 mit einem Verschlusselement 42, das im Bereich eines Rücksprungs 40 bzw. einer Rücknehmung 32 angeordnet ist. Diese Ausführungsform kann, soweit nicht anders beschrieben, beispielsweise der Ausführungsform des Luftfilters 10 der Fig. 1a, insbesondere gemäß der Darstellung der Fig. 1c, entsprechen. In Strichlinierung ist insbesondere die Außenkontur 30 entlang des Filtermediums 24 (Fig. 1a), mithin der Verlauf der Stirnkanten 28 (Fig. 1a), dargestellt. Des Weiteren ist ein Rand **64** des Luftfilters 10 zu erkennen.

**Fig. 7b** zeigt einen Bereich **62** mit der Rücknehmung 32 des Luftfilters 10 der Fig. 7a in vergrößerter Ansicht. Danach ragt die Rücknehmung 32 mit einer Einragtiefe **I₁,** gemessen als Abstand des in radialer Richtung innersten Punktes der Außenkontur 30 des Filtermediums 24 zur Außenkontur 30 außerhalb des Bereiches der Rücknehmung 32, in das Flachluftfilterelement 14 (Fig. 1a) hinein. In diesem Ausführungsbeispiel beträgt die Einragtiefe I₁ mindestens 10 mm oder 10,5 mm, insbesondere ca. 10,8 mm. Der Mittelpunkt des Verschlusselements 42 ist mit einem Abstand I₂, in diesem Ausführungsbeispiel ca. 15 mm, von diesem innersten Punkt beabstandet.

Des Weiteren ist der innerste Punkt in diesem Ausführungsbeispiel mit einem Abstand I₃, in diesem Ausführungsbeispiel ca. 22 mm, vom Rand 64 beabstandet.

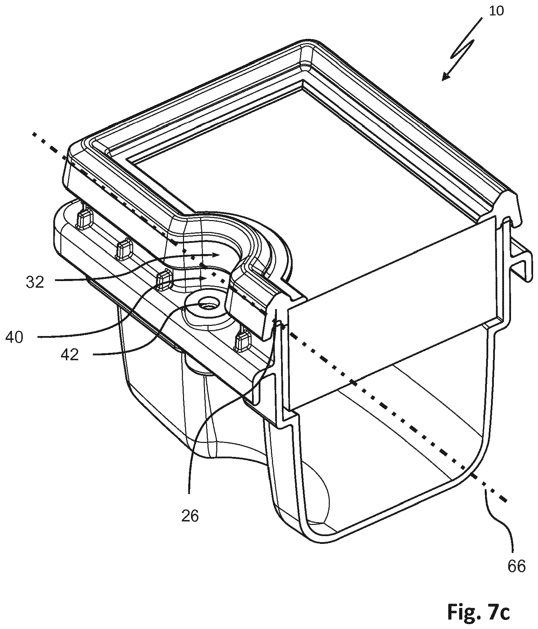

Wie aus der perspektivischen Darstellung der **Fig. 7c** des Luftfilters 10 der Fig. 7a, hier ohne Gehäusedeckel 18 (Fig. 1a), zu erkennen, ist bei dieser Ausführungsform das Verschlusselement 42 entlang einer gedachten linearen, die Rücknehmung 32 und insbesondere auch den Rücksprung 40 überbrückenden, Fortsetzung **66** des Dichtungselements 26, insbesondere wie hier gezeigt der als die Gehäusekante umschließenden, dichtungsnutförmigen Hauptdichtfläche, angeordnet.

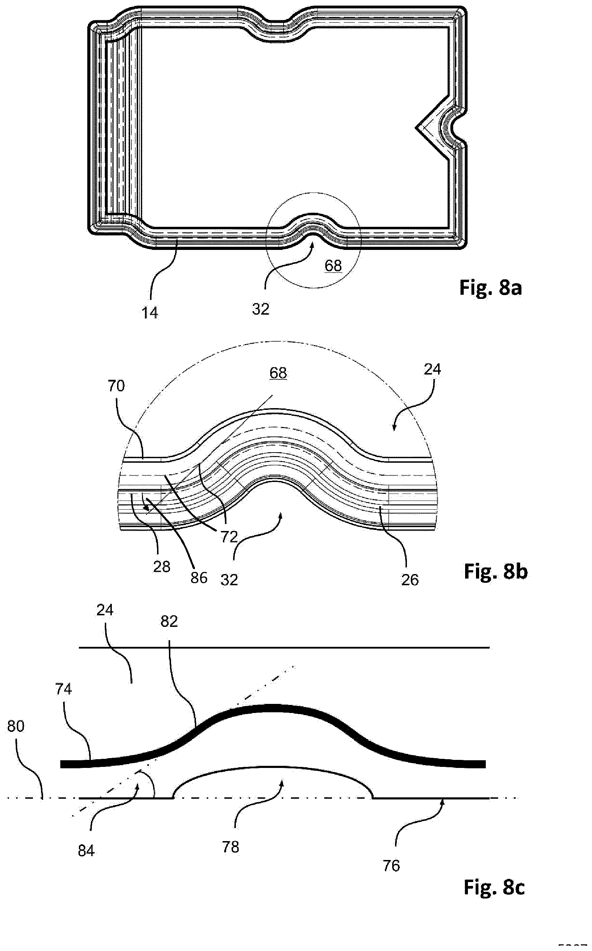

**Fig. 8a** zeigt ein alternatives Flachluftfilterelement 14 mit einer in einem Bereich **68** befindlichen Rücknehmung 32 in schematischer Draufsicht, wobei der Bereich 68 wiederum in **Fig. 8b** vergrößert dargestellt ist.

Wie insbesondere Fig. 8b entnehmbar ist, grenzt das Dichtungselement 26 an ein als Faltenbalg ausgebildetes Filtermedium 24 des Flachluftfilterelements 14 an. Das Filtermedium 24 weist eine (in der Fig. 8b schematisch dargestellte) Stirnkantenverleimung **72** auf, durch die die einzelnen Falten des Faltenbalges miteinander dichtend verbunden sind. Die Stirnkantenverleimung 72 verläuft in einem Randbereich des Filtermediums 24, insbesondere beabstandet von den Stirnkanten 28.

Das Dichtungselement 26 ist an das Filtermedium 24 mittels einer Dichtungsanbindungskontur **70** dichtend angebunden. Insbesondere umschließt die Dichtungsanbindungskontur 70 das Filtermedium 24 formschlüssig dichtend. Dazu überragt sie dieses reinseitig. Die Dichtungsanbindungskontur 70 ist in diesem Ausführungsbeispiel vorzugsweise aus Schaummaterial, beispielsweise aus Polyurethan, gefertigt.

Zu erkennen ist, dass die Dichtungsanbindungskontur 70, die Stirnkantenverleimung 72 und in diesem Ausführungsbeispiel auch die Stirnkanten 28, insbesondere im Bereich der Rücknehmung 32, zueinander parallel verlaufen. Im Bereich der Rücknehmung 32 verlaufen auch das Dichtungselement 26 und die Stirnkanten 28 zu einander parallel.

Mithin ergibt sich, dass in diesem Ausführungsbeispiel die Dichtungsanbindungskontur 70, die Stirnkantenverleimung 72, die Stirnkanten 28 und das Dichtungselement 26 im Bereich der Rücknehmung 26 zueinander parallel verlaufen.

**Fig. 8c** zeigt in schematisierter Darstellung den Verlauf einer Leimraupe **74** auf einem (noch) ungefalteten Filtermedium 24. Aus Darstellungsgründen ist dabei nur ein Ausschnitt, insbesondere ein Randbereich, des Filtermediums 24 abgebildet.

Die Leimraupe 74 verläuft in diesem Ausführungsbeispiel, insbesondere ungeknickt, im Randbereich des Filtermediums 24. Sie folgt im Wesentlichen einer Stirnkante **76** des Filtermediums 24, wobei sie beispielhaft zu dieser in einen Innenbereich des Filtermediums 24 hin versetzt ist.

In diesem Beispiel weist das (ungefaltete) Filtermedium 24 eine Einbuchtung **78** auf, aus der später eine Rücknehmung 32 durch Faltung gebildet wird. Auch die Einbuchtung 78 wird von der Leimraupe 74 umlaufen. Unter Hinwegdenkens der Einbuchtung 78 ergibt sich entlang der Stirnkante 76 eine Hauptrichtung **80.**

Für einen beispielhaft ausgewählten Punkt **82** auf der Leimraupe 74 zeigt Fig. 8c den sich aus der Neigung der Tangente im Punkt 82 zur Hauptrichtung 80 ergebenden Tangentialwinkel **84.** Zu erkennen ist insbesondere, dass der Verlauf der Leimraupe 74 derart gewählt ist, dass der Tangentialwinkel 84 flach ausgeführt ist. Insbesondere im Bereich der Einbuchtung 78, mit anderen Worten im Bereich der (späteren) Rücknehmung 32, beträgt der Tangentialwinkel 84 höchstens 45° aber im Regelfall höchstens 30°. Dazu ist insbesondere in den Endbereichen der Einbuchtung 78, in der diese abknickt, der Verlauf der Leimraupe 74 nicht zur Einbuchtung parallel.

Wird das Filtermedium 24 nun gefaltet, so können die einzelnen Falten zur Ausbildung der Stirnkantenverleimung 72 (Fig. 8b) miteinander verbunden werden. Dabei sind Verlauf und Breite der Leimraupe 74 insbesondere derart gewählt, dass jeweils benachbarte Abschnitte der Leimraupe 74 sich zumindest teilweise überdecken. In gefaltetem Zustand, d. h. bei aufgestellten und durch die Stirnkantenverleimung 72 verbundenen Faltabschnitten, ist die Stirnkantenverleimung 72 bevorzugt wenigstens im Bereich der Rücknehmung, vorzugsweise entlang der gesamten Stirnseiten des Flachluftfilterelements, unter einem Tangentialwinkel 86 (Fig. 8b) von höchstens 45° zur Hauptrichtung des gefalteten Filtermediums, d. h. zur Stirnseite 28 des gefalteten Filtermediums verlaufend ausgeführt. Dies bedeutet, dass die durch die im gefalteten Zustand sichtbaren Teile der Stirnkantenverleimung 72 im Bereich der Faltenspitzen gebildete Kurve, deren Verlauf in Fig. 8b strichliniert erkennbar ist, maximal einen Winkel 86 von 45° zur Stirnseite und damit minimal einen Winkel von 45° zu den Faltkanten aufweist.

## Patentansprüche

1. Luftfilter (10), insbesondere im Luftansaugtrakt eines Verbrennungsmotors, umfassend ein Filtergehäuse (12) mit einem Gehäusetopf (16) und mit einem Gehäusedeckel (18), sowie ein Verschlusselement (42) zum Verschließen des Filtergehäuses (12); und ein Flachluftfilterelement (14)
mit einem Filtermedium (24) aus einem Zellulosematerial, das als zickzackförmig gefalteter Faltenbalg ausgebildet ist und das ein umlaufendes Dichtungselement (26) trägt,
wobei das Dichtungselement (26) und das Filtermedium (24) an einer Außenkontur (30) des Flachluftfilterelements (14) mindestens eine Rücknehmung (32) aufweisen,
wobei das Flachluftfilterelement (14) mit seinem Dichtungselement (26) im verschlossenen Zustand des Filtergehäuses (12) zwischen dem Gehäusetopf (16) und dem Gehäusedeckel (18) umlaufend geklemmt gehalten ist,
wobei an dem Dichtungselement (26) eine umlaufende Haltenut (48) zum Eingreifen eines Gehäuseteils (16, 18) des Filtergehäuses (12) ausgebildet ist und der Gehäusetopf (16) oder der Gehäusedeckel (18) in die Haltenut (48) des Dichtungselements (26) eingreift,
wobei das Verschlusselement (42) des Filtergehäuses (46) im Bereich der Rücknehmung (32) entlang oder im Wesentlichen entlang einer gedachten linearen, die Rücknehmung (32) überbrückenden Fortsetzung (66) des Dichtungselements (26) angeordnet ist,
wobei das Filtermedium (24) miteinander verleimte Stirnkanten (28) in Form einer Stirnkantenverleimung (72) aufweist,
wobei eine Dichtungsanbindungskontur (70) des Dichtungselements (26) und die Stirnkantenverleimung (72) im Bereich der Rücknehmung (32) zueinander parallel verlaufen,
und wobei die Stirnkantenverleimung (72) in gefaltetem Zustand wenigstens im Bereich der Rücknehmung (32) unter einem Tangentialwinkel (86) von höchstens 45° zu einer Hauptrichtung (80) des ungefalteten Filtermediums (24) verläuft, wobei sich die Hauptrichtung (80) aus der Richtung der Stirnkante des ungefalteten Filtermediums außerhalb der Rücknehmung (32) ergibt.

2. Luftfilter nach Anspruch 1, **dadurch gekennzeichnet, dass** die Rücknehmung (32) an einem Eckbereich (54) des Flachluftfilterelements (14), insbesondere in Form einer Fase, ausgebildet ist.

3. Luftfilter nach Anspruch 1 oder 2, **dadurch gekennzeichnet, dass** die Rücknehmung (32), insbesondere mittig, an einer Seitenkante (34) des Flachluftfilterelements (14) ausgebildet ist.

4. Luftfilter nach einem der vorhergehenden Ansprüche, **dadurch gekennzeichnet, dass** die Rücknehmung (32) als eine gewölbte Einbuchtung des Flachluftfilterelements (14) ausgeführt ist.

5. Luftfilter nach einem der vorhergehenden Ansprüche, **dadurch gekennzeichnet, dass** die Rücknehmung (32) eine Einragtiefe (I₁) von mindestens 10 mm, vorzugsweise mindestens 10,5 mm, aufweist.

6. Luftfilter nach einem der vorhergehenden Ansprüche, **dadurch gekennzeichnet, dass** die Stirnkantenverleimung (72) in gefaltetem Zustand entlang der gesamten Stirnseiten des Flachluftfilterelements (14) unter einem Tangentialwinkel (86) von höchstens 45° zu der Hauptrichtung (80) des ungefalteten Filtermediums (24) verläuft.

7. Luftfilter nach einem der vorangehenden Ansprüche, **dadurch gekennzeichnet, dass** die Dichtungsanbindungskontur (70) des Dichtungselements (26) und die Stirnkantenverleimung (72) entlang der gesamten Stirnseiten des Flachluftfilterelements (14) zueinander parallel verlaufen.

8. Luftfilter nach einem der vorangehenden Ansprüche, **dadurch gekennzeichnet, dass** das Dichtungselement (26) und die Stirnkanten (28) im Bereich der Rücknehmung (32), vorzugsweise entlang der gesamten Stirnseiten des Flachluftfilterelements (14), zueinander parallel verlaufen.

9. Luftfilter nach einem der vorangehenden Ansprüche, **dadurch gekennzeichnet, dass** das Dichtungselement (26) und/oder die Stirnkanten (28) im Bereich der Rücknehmung (32), vorzugsweise entlang der gesamten Stirnseiten des Flachluftfilterelements (14), parallel zur Stirnkantenverleimung (72) verlaufen.

10. Luftfilter nach einem der vorhergehenden Ansprüche, **dadurch gekennzeichnet, dass** das Dichtungselement (26) aus Polyurethan gefertigt ist, wobei das Dichtungselement (26) an das Flachluftfilterelement (14) bevorzugt angespritzt oder angeschäumt ist.

11. Luftfilter nach einem der vorhergehenden Ansprüche, **dadurch gekennzeichnet, dass** das Verschlusselement (42) eine Spannfeder, eine Schraube oder ein anderes Spannelelement ist.

12. Luftfilter nach einem der vorhergehenden Ansprüche, **dadurch gekennzeichnet, dass** von der Rücknehmung (32) abgewandt der Gehäusedeckel (18) und der Gehäusetopf (16) über ein Scharnier und ein Spannelement, insbesondere eine Spannfeder oder eine Schraube, miteinander verbunden sind, das auf einer der Rücknehmung (32) des Flachluftfilterelements (14) gegenüberliegend angeordneten Gehäuseseite angeordnet ist.

13. Luftfilter nach einem der vorhergehenden Ansprüche, **dadurch gekennzeichnet, dass** das Filtergehäuse (12) mehrere Verschlusselemente (42) und das Flachluftfilterelement (14) eine der Anzahl der Verschlusselemente (42) enstsprechende Anzahl an Rücknehmungen (32) aufweist.

14. Verwendung eines Flachluftfilterelements (14) in einem Luftfilter (10) nach einem der Ansprüche 1 bis 13.

## Claims

1. An air filter (10), in particular in the air intake tract of an internal combustion engine, comprising a filter housing (12) having a housing pot (16) and having a housing cover (18) as well as a closure member (42) for closing the filter housing (12); and a flat air filter element (14)
having a filter medium (24) made of cellulose material designed as a zigzag-folded filter bellows and carrying a circumferential sealing element (26), wherein the sealing element (26) and the filter medium (24) feature at least one recess (32) at an outer contour (30) of the flat air filter element (14),
wherein the flat air filter element (14) with its sealing element (26) is circumferentially clamped between the housing pot (16) and the housing cover (18) in the closed state of the filter housing (12),
wherein a circumferential holding groove (48) for engaging of a housing component (16, 18) of the filter housing (12) is provided on the sealing element (26) and the housing pot (16) or the housing cover (18) engages into the holding groove (48) of the sealing element (26),
wherein the closure member (42) of the filter housing (46) is disposed in the area of the recess (32) along or substantially along an imaginary linear extension (66) of the sealing element (26) bridging the recess (32),
wherein the filter medium (24) features front edges (28) glued with each other in the shape of a front edge gluing (72),
wherein a sealing connection contour (70) of the sealing element (26) and the front edge gluing (72) extend parallel to each other in the area of the recess (32),
and wherein the front edge gluing (72) in the folded state extends at least in the area of the recess (32) at a tangential angle (86) of at most 45° to a main direction (80) of the unfolded filter medium (24),
wherein the main direction (80) results from the direction of the front edge of the unfolded filter medium outside the recess (32).

2. The air filter according to claim 1, **characterized in that** the recess (32) is designed at a corner area (54) of the flat air filter element (14), in particular in the shape of a chamfer.

3. The air filter according to claim 1 or 2, **characterized in that** the recess (32) is designed, in particular centrally, at a lateral edge (34) of the flat air filter element (14).

4. The air filter according to one of the preceding claims, **characterized in that** the recess (32) is designed as a curved indentation of the flat air filter element (14).

5. The air filter according to one of the preceding claims, **characterized in that** the recess (32) features an insertion depth (I₁) of at least 10 mm, preferably of at least 10.5 mm.

6. The air filter according to one of the preceding claims, **characterized in that** the front edge gluing (72), in the folded state, extends along the entire front faces of the flat air filter element (14) under a tangential angle (86) of at most 45° to the main direction (80) of the unfolded filter medium (24).

7. The air filter according to one of the preceding claims, **characterized in that** the sealing connection contour (70) of the sealing element (26) and the front edge gluing (72) extend parallel to each other along the entire front faces of the flat air filter element (14).

8. The air filter according to one of the preceding claims, **characterized in that** the sealing element (26) and the front edges (28) extend parallel to each other in the area of the recess (32), preferably along the entire front faces of the flat air filter element (14).

9. The air filter according to one of the preceding claims, **characterized in that** the sealing element (26) and/or the front edges (28) extend parallel to the front edge gluing (72) in the area of the recess (32), preferably along the entire front faces of the flat air filter element (14).

10. The air filter according to one of the preceding claims, **characterized in that** the sealing element (26) is made of polyurethane, wherein the sealing element (26) is preferably injection-molded or foamed to the flat air filter element (14).

11. The air filter according to one of the preceding claims, **characterized in that** the closure member (42) is a tension spring, a screw or another clamping element.

12. The air filter according to one of the preceding claims, **characterized in that** the housing cover (18) and the housing pot (16), facing away from the recess (32), are interconnected via a hinge and a clamping element, in particular a tension spring or a screw, which is disposed on a housing side opposing the recess (32) of the flat air filter element (14).

13. The air filter according to one of the preceding claims, **characterized in that** the filter housing (12) features a plurality of closure members (42) and the flat air filter element (14) a number of recesses (32) corresponding to the number closure members (42).

14. A use of a flat air filter element (14) in an air filter (10) according to one of the claims 1 to 13.

## Revendications

1. Filtre à air (10), notamment dans le conduit d'admission d'air d'un moteur à combustion interne, comprenant un boîtier de filtre (12) ayant un pot de boîtier (16) et ayant un couvercle de boîtier (18) ainsi qu'un élément de fermeture (42) permettant de fermer le boîtier de filtre (12); et un élément de filtre à air plat (14) ayant un milieu filtrant (24) en matériau cellulosique conçu en tant que soufflet de filtre plié en accordéon et qui porte un élément d'étanchéité (26) circonférentiel,
l'élément d'étanchéité (26) et le milieu filtrant (24) présentant au moins un retrait (32) sur un contour extérieur (30) de l'élément de filtre à air plat (14),
l'élément de filtre à air plat (14) étant maintenu par serrage de manière circonférentielle avec son élément d'étanchéité (26) entre le pot de boîtier (16) et le couvercle de boîtier (18) à l'état fermé du boîtier de filtre (12),
une rainure d'arrêt (48) circonférentielle étant conçue sur l'élément d'étanchéité (26) pour l'engagement d'un composant de boîtier (16, 18) du boîtier de filtre (12) et le pot de boîtier (16) ou le couvercle de boîtier (18) s'engageant dans la rainure d'arrêt (48) de l'élément d'étanchéité (26),
l'élément de fermeture (42) du boîtier de filtre (46) étant disposé dans la zone du retrait (32) le long ou essentiellement le long d'un prolongement linéaire imaginaire (66) de l'élément d'étanchéité (26), qui enjambe le retrait (32),
le milieu filtrant (24) présentant des arêtes frontales (28) collés les uns aux autres sous la forme d'un collage des arêtes frontales (72),
un contour de liaison d'étanchéité (70) de l'élément d'étanchéité (26) et le collage des arêtes frontales (72) s'étendant parallèlement l'un à l'autre dans la zone du retrait (32),
et le collage des arêtes frontales (72) s'étendant à l'état plié, au moins dans la zone du retrait (32), sous un angle tangentiel (86) ne dépassant pas 45° par rapport à une direction principale (80) du milieu filtrant (24) non plié,
la direction principale (80) résultant de la direction de l'arête frontale du milieu filtrant non plié en dehors du retrait (32).

2. Filtre à air selon la revendication 1, **caractérisé en ce que** le retrait (32) est réalisé sur une section de coin (54) de l'élément de filtre à air plat (14), notamment sous forme d'un chanfrein.

3. Filtre à air selon la revendication 1 ou 2, **caractérisé en ce que** le retrait (32) est réalisé, notamment au centre, sur une arête latérale (34) de l'élément de filtre à air plat (14).

4. Filtre à air selon l'une quelconque des revendications précédentes, **caractérisé en ce que** le retrait (32) est réalisé en tant que concavité bombée de l'élément de filtre à air plat (14).

5. Filtre à air selon l'une quelconque des revendications précédentes, **caractérisé en ce que** le retrait (32) présente une profondeur d'encastrement (I₁) d'au moins 10 mm, de préférence d'au moins 10,5 mm.

6. Filtre à air selon l'une quelconque des revendications précédentes, **caractérisé en ce que** le collage des arêtes frontales (72) en état plié s'étend le long de toutes les faces frontales de l'élément de filtre à air plat (14) sous un angle tangentiel (86) ne dépassant pas 45° par rapport à la direction principale (80) du milieu filtrant (24) non plié.

7. Filtre à air selon l'une quelconque des revendications précédentes, **caractérisé en ce que** le contour de liaison d'étanchéité (70) de l'élément d'étanchéité (26) et le collage des arêtes frontales (72) s'étendent parallèlement l'un à l'autre le long de toutes les faces frontales de l'élément de filtre à air plat (14).

8. Filtre à air selon l'une quelconque des revendications précédentes, **caractérisé en ce que** l'élément d'étanchéité (26) et les arêtes frontales (28) s'étendent parallèlement l'un à l'autre dans la zone du retrait (32), de préférence le long de toutes les faces frontales de l'élément de filtre à air plat (14).

9. Filtre à air selon l'une quelconque des revendications précédentes, **caractérisé en ce que** l'élément d'étanchéité (26) et/ou les arêtes frontales (28) s'étendent parallèlement au collage des arêtes frontales (72) dans la zone du retrait (32), de préférence le long de toutes les faces frontales de l'élément de filtre à air plat (14).

10. Filtre à air selon l'une quelconque des revendications précédentes, **caractérisé en ce que** l'élément d'étanchéité (26) est réalisé en polyuréthane, l'élément d'étanchéité (26) étant de préférence moulé par injection ou moussé sur l'élément de filtre à air plat (14).

11. Filtre à air selon l'une quelconque des revendications précédentes, **caractérisé en ce que** l'élément de fermeture (42) est un ressort de rappel, une vis ou un autre élément de rappel.

12. Filtre à air selon l'une quelconque des revendications précédentes, **caractérisé en ce que,** à l'opposé du retrait (32), le couvercle de boîtier (18) et le pot de boîtier (16) sont reliés l'un à l'autre par une charnière et un élément de rappel, notamment un ressort de rappel ou une vis, qui est disposé sur un côté du boîtier opposé au retrait (32) de l'élément de filtre à air plat (14).

13. Filtre à air selon l'une quelconque des revendications précédentes, **caractérisé en ce que** le boîtier de filtre (12) présente plusieurs éléments de fermeture (42) et l'élément de filtre à air plat (14) présente un nombre de retraits (32) correspondant au nombre d'éléments de fermeture (42).

14. Utilisation d'un élément de filtre à air plat (14) dans un filtre à air (10) selon l'une quelconque des revendications 1 à 13.
